# EUROPEAN PATENT SPECIFICATION

(11) **EP 3 515 049 B1**
(45) Date of publication and mention of the grant of the patent: **26.08.2020**
(21) Application number: 19152976.7
(22) Date of filing: 22.01.2019
(51) Int. Cl.: H04M 1/02

(54) **NAMEPLATE-BUTTON GROUP FOR OUTDOOR INTERCOM UNIT OF AN INTERCOM AND/OR VIDEO DOOR ENTRY SYSTEM AND OUTDOOR INTERCOM UNIT USING THE SAME**
NAMENSSCHILD-TASTENGRUPPE FÜR EINE AUSSENSPRECHANLAGE EINER SPRECHANLAGE UND/ODER EINER VIDEO-TÜRÖFFNUNGSANLAGE UND EINE AUSSENSPRECHANLAGE MIT DIESER TASTE
GROUPE DE TOUCHES PORTE-NOM POUR INTERPHONE EXTERIEUR D'UN SYSTEME D'INTERPHONE ET/OU DE PORTE VIDEO ET INTERPHONE EXTERIEUR L'UTILISANT

(30) Priority: 23.01.2018 IT 201800001697
(43) Date of publication of application: 24.07.2019
(73) Proprietor: Comelit Group S.p.a., 24020 Rovetta San Lorenzo (BG) (IT)
(72) Inventor: GATTI, GUIDO GIULIO VITTORIO, 24020 Rovetta (BG) (IT); NICOLI, SERGIO, 24020 Rovetta (BG) (IT); BARZASI, EDOARDO, 24020 Rovetta (BG) (IT)
(74) Representative: Mati, Silvia

(56) References cited:
- EP-A1- 1 482 719
- CN-U- 203 882 549
- DE-A1- 3 602 283
- DE-C1- 10 001 053
- DE-U1- 29 609 977

## Description

### TECHNICAL FIELD

The present invention generally relates to a nameplate-button group for an outdoor intercom unit of an intercom and/or video door entry system and an outdoor intercom unit using the same group.

The term outdoor intercom unit means a generic user apparatus applied externally to a building or to an apartment, which detects an audio and/or video signal, and provides an audio/video signal received from an indoor intercom unit connected to the same.

The term indoor intercom unit means a user apparatus, for example an intercom or a video door entry system, installable inside a housing unit and configured to provide an audio and/or video signal, received from an outdoor unit, and to transmit a collected audio signal to the outdoor unit.

The indoor intercom units thus usually comprise an audio interface formed by at least one microphone for collecting an audio signal and a speaker for reproducing audio. In the case of a video door entry system, an interface is also provided for acquiring video signals, such as a video camera.

In particular, the present invention relates to a nameplate-button group used in an outdoor intercom unit of the type comprising at least one structure for housing the necessary components and a cover panel for these components, which however allows access.

The known outdoor intercom units generally have a complex structure which mainly concerns the cover panel, which is usually designed to hold the call buttons, the nameplates and sometimes also the microphone and the loudspeaker in addition to any camera.

The panels are generally formed by a metal plate in which the openings and the housing seats needed for the components of the outdoor unit are obtained.

These openings and housing seats are therefore weak points in terms of the penetration of humidity and water, which can lead to damage or malfunction in the individual components of the intercom, in addition to the deterioration of the nameplates bearing the identifiers to which each button refers.

Moreover, the replacement of a nameplate or button usually requires the disassembly of the entire cover panel in order to access the compartment housing the plates, generally accessible from the back of the panel. This operation normally requires acting on suitable fixing means, such as screws, which subsequently must be replaced for operation, leading to an inconvenient and laborious operation.

Last but not least, the implementation of the known intercom units is quite complex from the perspective of the wiring of the individual buttons, in particular in the case of an outdoor unit which is connected to a large number of internal units, such as in condominiums.

Document EP 1 482 719 A1 describes a nameplate-button group for an outdoor intercom unit which includes a housing that defines two seats inside it to hold a button and a nameplate, respectively. In the seat intended for receiving the nameplate, there is a nameplate holder consisting of an external element and an internal element, wherein the external element is box-shaped with an open side and the internal element is configured to close the open side of the external element. Document EP 1 482 719 A1 further describes that the nameplate holder is deformed when the nameplate is removed.

Document CN 203 882 549 U discloses a nameplate holder which comprises a nameplate cover and a sealing member which together define a chamber into which the nameplate is housed. The cover comprises end surfaces that are configured to be detachably mounted on an outdoor unit body.

Document DE 10 001 053 C1 describes a doorbell module that has housing provided with a seating for a push-button head and a seating for a nameplate housing. In order to retain the nameplate housing into its seating, the seating is provided with connecting racks that engage into guiding grooves provided in the nameplate housing.

Document DE 3 602 283 A1 discloses a nameplate with a housing frame which defines a seat for a button and a seat for a nameplate holder. The seat for the nameplate holder accommodates a transparent nameplate holder in which an identification plate is inserted. The nameplate holder is pivotally connected to the housing frame in order to allow exchanging the identification plate.

Document DE 29 609 977 U1 describes a push button for a nameplate-button group for outdoor intercom units of an intercom and/or video door entry system.

### OBJECTS AND SUMMARY OF THE INVENTION

In light of the foregoing, the problem underlying the present invention is that of devising a nameplate-button group for an outdoor intercom unit of an intercom and/or video door entry system that allows replacing the nameplates and/or buttons without having to disassemble the cover panel.

Within the scope of this problem, an object of the present invention is that of creating a nameplate-button group for an outdoor intercom unit of an intercom and/or video door entry system which does not require intervening on the fixing means, for example screws, in order to replace the nameplates and/or buttons.

A further object of the present invention is to study a nameplate-button group for an outdoor intercom unit of an intercom and/or video door entry system which has good resistance to water and humidity.

Another object of the present invention is to provide a nameplate-button group for an outdoor intercom unit of an intercom and/or video door entry system which can be installed and connected in a quick and simple manner.

According to a first aspect thereof, the invention thus relates to a nameplate-button group for an outdoor intercom unit of an intercom and/or video door entry system according to claim 1

The Applicant has devised creating at least part of the bottom wall of the box-like structure containing the nameplate in elastic material, thus obtaining both a watertight seal against the second seat of the housing structure, as well as the possibility of inserting and removing the bayonet-shaped box-like structure, thereby rendering the preventive disassembly of the cover panel superfluous.

The Applicant has in fact assessed that the elastic behaviour of the bottom wall makes it possible to couple and uncouple the box-like structure from the second seat of the housing structure, simply by acting on one side thereof which is accessible through the corresponding opening formed on the cover panel.

The Applicant has furthermore observed that by making at least part of the wall itself in an elastic material, the use of special elastic means is made superfluous, which would render the assembly of the group complex and expensive.

In essence, the Applicant has identified an extremely simple but effective solution that allows the convenient removal of the structure containing the nameplate by acting with common tools through the corresponding opening formed in the cover panel, so as to render the disassembly of the same superfluous.

In doing so, the nameplate replacement operations are particularly rapid and simple to implement.

According to a second aspect thereof, the invention relates to an outdoor intercom unit for an intercom and/or video door entry system comprising at least one cover panel and at least one nameplate-button group of the type described above, the cover panel being provided with at least a pair of openings, wherein a button and a protective cover of a nameplate of the at least one nameplate-button group respectively look out the at least one pair of openings.

Advantageously, the outdoor intercom unit achieves the technical effects described above in relation to the nameplate-button group according to the invention.

The present invention may have at least one of the preferred following features; the latter may in particular be combined with one another as desired in order to meet specific application needs.

Preferably, the bottom wall comprises a central portion supporting the plate of greater thickness and a base portion of lesser thickness configured to form at least one nose protruding from the central portion, preferably from the base of the central portion.

More preferably, the bottom wall comprises a central portion supporting the plate of greater thickness and a base portion of lesser thickness configured to form at least two noses protruding from the central portion in opposite directions, preferably from the base of the central portion.

Advantageously, the noses protruding from the central portion cooperate with the walls of the second seat of the housing structure, determining a stable and sealed housing.

More preferably, the central portion is complementarily shaped to the open side of the protective cover.

Conveniently, the central portion of greater thickness can at least partially penetrate inside the protective cover, thus forming a hermetically sealed compartment in which the name plate is housed.

Preferably, at least one engagement nose protrudes from an edge of the open side of the protective cover, the engagement nose being configured to engage beneath at least one first protrusion obtained in a wall of the second seat of the housing structure.

Preferably, in a side wall of the protective cover, opposite to the side from which the engagement nose protrudes, a recess is provided, the recess being configured for receiving at least one second protrusion formed in an opposite wall of the second seat with respect to the wall that carries the at least one first protrusion.

Advantageously, the particular structure of the protective cover allows a bayonet fitting in the second seat of the housing structure and a facilitated release, acting at the recess. In this way locking and unlocking is particularly easy, while ensuring a stable constraint of the box-like structure in the second seat also thanks to the elastic interference exerted by the bottom wall.

Preferably, the bottom wall is at least partially made of a material permeable to light.

More preferably, the bottom wall is at least partially made of silicone.

Even more preferably, a diffusive layer is provided below the bottom wall.

Conveniently, this embodiment of the bottom wall allows it to be used as a light guide, obtaining a backlighting of the nameplate. Moreover, the diffusive layer contributes to obtaining a substantially homogeneous backlighting.

Preferably, the button comprises a key movably located along an actuation axis at the first seat, a key cover being releasably locked above the key with reference to the actuation axis.

Advantageously, it is thus possible to easily replace the key cover without disassembling the cover panel.

Preferably, a gasket element is interposed between the key cover and the key.

More preferably, the gasket element is made of a yielding material.

Conveniently, this ensures that the key can be actuated by applying pressure to the key cover, while still ensuring the water and moisture seal in each configuration.

More preferably, the key cover is mushroom-shaped thereby comprising a head and an appendix which protrudes below the head, the key centrally comprising a hole for the insertion of the lower appendix of the key cover.

Even more preferably, the lower appendix of the key cover is removably coupled to the key.

Advantageously, the mushroom-shaped structure of the key cover makes it possible to create a removable lock between the key and the key cover which is particularly simple but effective.

More preferably, the gasket element comprises an engagement portion configured to fit into an engagement seat of the housing structure interposed between the first seat and the second seat.

Preferably, the nameplate-button group comprises at least one electronic board which can be connected to an electronic board of the outdoor intercom unit according to a master-slave configuration.

More preferably, the nameplate-button group comprises at least one master-type electronic board comprising at least two first connectors for the connection to a second master-type electronic board or to the electronic board of the outdoor intercom unit, and a plurality of second connectors for connection to a slave-type electronic board.

More preferably, the nameplate-button group comprises at least one slave-type electronic board comprising at least one connector for the connection to a master-type electronic board.

Preferably, the electronic board comprises at least one switch, of the analog and/or electronic type, which can be actuated through the button.

### BRIEF DESCRIPTION OF THE DRAWINGS

Further features and advantages of the present invention will be more evident from the following description of some preferred embodiments thereof made with reference to the appended drawings.

The different features in the individual configurations can be combined with each other as preferred according to the previous description, should it be necessary to avail of the advantages resulting specifically from a particular combination.

In such drawings,
- figure 1 is a cutaway representation of a preferred embodiment of an outdoor intercom unit of an intercom and/or video door entry system employing a nameplate-button group according to the present invention, shown on site, embedded in a wall;
- figure 2 is a cutaway representation of a preferred embodiment of a module of an outdoor intercom unit of an intercom and/or video door entry system employing a nameplate-button group according to the present invention, shown on site, embedded in a wall;
- figure 3 is a section view of a preferred embodiment of a nameplate-button group according to the present invention, shown embedded in a wall;
- figure 4 is an enlarged perspective view of the nameplate-button group of figure 3;
- figure 5 is a block diagram of the optimized connection architecture which can be implemented through a preferred embodiment of the nameplate-button group according to the invention.

### DETAILED DESCRIPTION OF THE INVENTION

In the following description, for the illustration of the figures, identical numbers or reference symbols are used to indicate construction elements with the same function. Further, for illustration clarity, some references may not be repeated in all the figures.

While the invention is susceptible to various modifications and alternative constructions, certain preferred embodiments are shown in the drawings and are described hereinbelow in detail. However, it is to be understood that there is no intention to limit the invention to the specific embodiment illustrated but, on the contrary, the invention intends to cover all the modifications, alternative and equivalent constructions that fall within the context of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

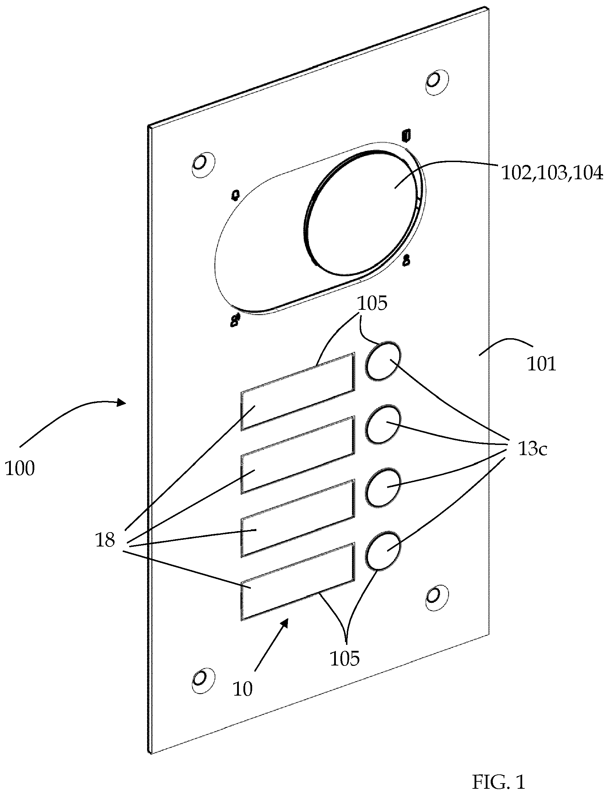

Figure 1 shows a first embodiment of an outdoor intercom unit of an intercom and/or video door entry system, indicated as a whole with the number 100, comprising a cover panel 101 which carries a microphone 102 for collecting an audio signal, a loudspeaker 103 for audio reproduction, a video camera 104 and a plurality of nameplate-button groups 10 according to the present invention. For this purpose the cover panel 101 has a plurality of pairs of openings 105, with a button 13 and a protective cover 18 of a nameplate 14 facing each other in each.

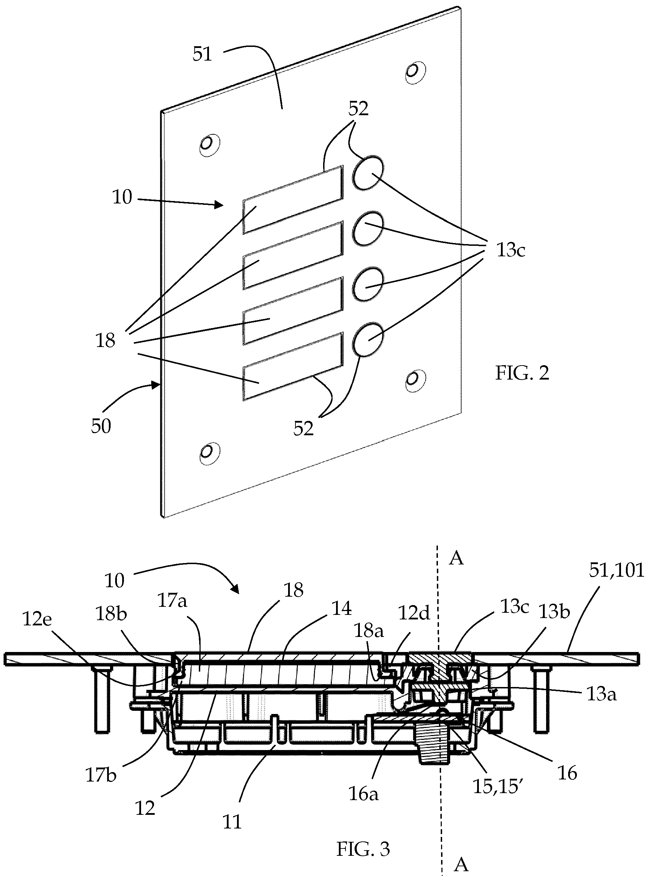

Figure 2 shows part of a second embodiment of an outdoor intercom unit of an intercom and/or video door entry system, of the modular type. In particular, figure 2 shows a module 50 comprising a portion of cover panel 51 which carries a plurality of nameplate-button groups 10 according to the present invention. Also in this case, the cover panel 51 has a plurality of pairs of openings 52, with a button 13 and a protective cover 18 of a nameplate 14 facing each other in each.

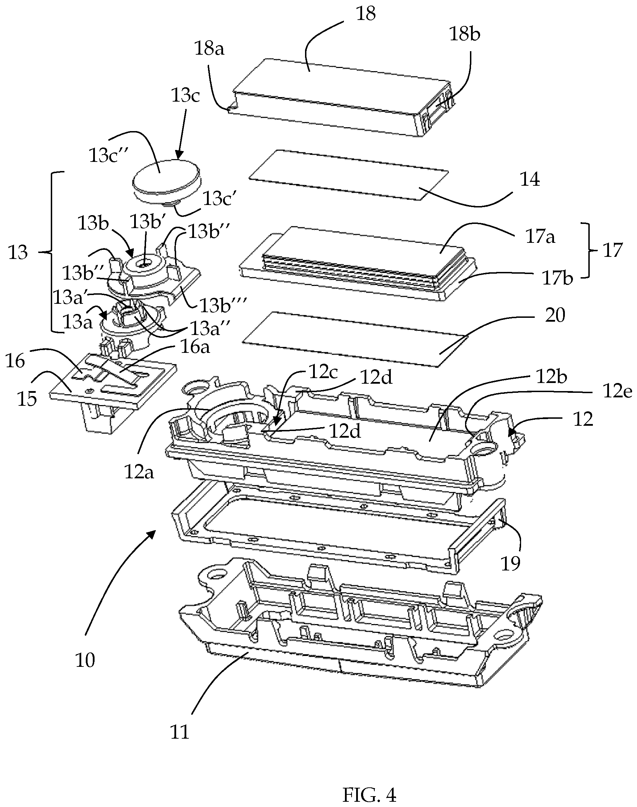

As shown in figures 3 and 4, each nameplate-button group 10 comprises a frame 11.

The frame 11 houses an electronic board 15,15' which carries a switch 16 which, in the illustrated embodiment, is of an analog type, comprising a spring contact 16a.

The switch 16 can be controlled by pressing the button 13 along an actuation axis A, which acts on the spring contact 16a of the switch 16.

Above the electronic board 15,15' with reference to the actuation axis A, a housing structure 12 sits comprising a first seat 12a for at least partially accommodating the button 13 and a second seat 12b for accommodating the nameplate 14.

Between the frame 11 and the housing structure 12, a sealing gasket 19 for water and humidity is advantageously interposed.

The housing structure 12 is in turn interposed between the frame 11 and the cover panel 101,51 so as to house the button and the nameplate behind the cover panel 101,51 once it is mounted in its operating position.

The button 13 comprises a key 13a made of rigid, electrically insulating material placed movably at the first seat 12a. In particular, the key 13a is maintained in a raised position through the action of the spring contact 16a.

In an alternative embodiment not shown, the switch 16 is of the electronic type, for example a *microswitch*, and therefore suitable elastic means are provided to keep the key 13a in the raised position.

The key 13a centrally comprises a hole 13a' delimited by a plurality of elastic tabs 13a" for the releasable insertion and constraint of a lower appendix 13c' of a mushroom-shaped key cover 13c.

A gasket element 13b is interposed between the key 13a and the key cover 13c, with reference to the actuation axis A, which centrally comprises a hole 13b' for the passage of the lower appendix 13c' of a key cover 13c.

In the non-operative condition, the assembly constituted by the key cover 13c and the key 13a rests on the elastic means 16a, so that the key cover 13c faces the corresponding opening 105,52 provided in the cover panel 51,101, with its upper head 13c" in a condition of substantial alignment with the outer surface of the panel 51,101 or partially protruding.

The gasket element 13b is made of yielding material in order to allow a translation of the key cover 13c, and consequently of the key 13a, towards the electronic board 15,15' as a result of the pressure exerted by a user along the actuation axis A on the key cover 13c and thus closing the contact 16a and activating the switch 16. This translation brings the head 13c" of the key cover 13c to retract or protrude less than the outer surface of the cover panel 51,101.

Once the pressure exerted by the user has been released, the elastic return of the spring contact 16a acting on the key 13a causes the key 13a to be repositioned in the raised position, and with it, the head 13c" of the key cover 13c in the position of substantial alignment or partial protrusion with respect to the outer surface of the cover panel 51,101.

In order to stop the return stroke of the head 13c" at the initial position and ensure a repositioning of the same in a condition parallel to the surface of the panel 51,101, the gasket element 13b comprises a plurality of end-stroke tabs 13b" which abut below the cover panel 51,101.

The gasket element 13b further comprises an engagement portion 13b" configured to fit into an engagement seat 12c of the housing structure 12 interposed between the first 12a and the second 12b seat.

At the second seat 12b of the housing structure 12 intended to house the nameplate 14, a rectangular bottom wall 17 is arranged for supporting the nameplate 14.

The bottom wall 17 comprises a thicker central portion 17a for supporting the plate and a thinner perimeter base portion 17b which in particular forms two protruding noses along opposite directions, each obtained at one of the shorter sides of the wall 17.

The protective cover 18 of the nameplate 14 is made of transparent material, preferably also made of elastic material.

The protective cover 18 has a box-shaped configuration with an open side having a complementary shape to the central portion 17a of the bottom wall 17, in order to allow the insertion of this central portion 17a in the protective cover 18.

An engagement nose 18a protrudes from the edge of the open side of the protective cover 18 intended to engage below a pair of first protrusions 12d formed in a wall of the second seat 12b of the housing structure 12 in such a way as to allow a bayonet coupling of the cover 18 in the second seat 12b.

At the side opposite that with the engagement nose 18a, a side wall of the protective cover 18 has a recess 18b configured to receive a second protrusion 12e formed in the opposite wall of the second seat 12b with respect to the wall carrying the pair of first protrusions 12d.

The recess 18b is accessible through the corresponding opening 105,52 formed in the panel 51,101 from which the protective cover 18 faces.

The bottom wall 17 is suitably made of elastic material in order to exert an elastic thrust against at least the two opposite sides of the second seat 12b against which the two protruding noses of the bottom wall 17 engage. In this way, an elastic retention of the second protrusion 12e in the recess 18b is carried out. At the same time, the bottom wall 17 acts as a gasket, ensuring the seal against the infiltration of water or moisture.

By acting with a tool on the recess 18b it is therefore possible to contrast the elastic force exerted by the bottom wall 17 against the sides of the second seat 12b and thus remove the protective cover 18 without first disassembling the panel 51,101.

Moreover, the interference exerted by the base portion 17b of the elastic bottom wall 17 against the opposite sides of the second seat 12b ensures an excellent seal against the infiltration of water and humidity, with respect to the electronic board 15,15'.

Last but not least, the protection of the nameplate 14 is ensured by its housing inside the protective cover 18 wherein the central portion 17a of the bottom wall 17 is also inserted. The constraint of the ends of the bottom wall 17b and of the protective cover 18 below the first protrusions 12d and of the second protrusion 12e of the second seat 12b makes the housing of the nameplate 14 perfectly sealed.

In a particularly advantageous manner, the bottom wall 17 is made of a material permeable to light in order to act as a light guide and therefore allow the nameplate 14 to be backlit.

In the illustrated embodiment, the bottom wall 17 is advantageously made of silicone.

For the backlighting of the nameplate 14, a diffusive layer 20 is also provided which causes a transmission of the light distributed on the entire surface of the layer in a substantially homogeneous manner.

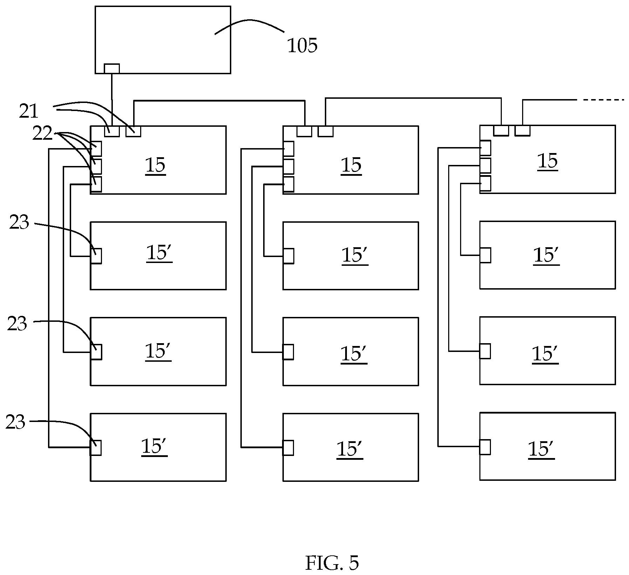

As shown in Figure 5, the electronic boards 15,15' of each nameplate-button group 10 are connected to the electronic board 105 of the outdoor unit 100 according to a master-slave architecture.

Therefore, electronic boards are provided for the nameplate-button group 10 of the master type 15 and the slave type 15'.

The master-type electronic boards 15 are provided with two IN/OUT connectors 21 for connection to a second, master-type electronic board 15 upstream or downstream, or to the electronic board 105 of the outdoor unit 100. Furthermore, the master-type electronic boards 15 comprise a plurality of connectors 22 for connection to a slave-type electronic board 15'.

The slave-type electronic boards 15' comprise a single connector 23 for connection to a master-type electronic board 15.

## Claims

1. Nameplate-button group (10) for outdoor intercom unit of an intercom and/or video door entry system comprising a housing structure (12) defining at least a first seat (12a) configured to at least partially accommodate a button (13) and a second seat (12b) configured to at least partially accommodate a nameplate (14), in the second seat (12b) there being housed a box-like structure (17,18) for containing the nameplate (14) comprising a protective cover (18) having a box-shaped configuration with an open side and a bottom wall (17) configured for closing the open side of the protective cover (18), the bottom wall (17) being at least partially made of an elastic material and being arranged internally to the second seat (12b) of the housing structure (12), **characterized in that** the bottom wall (17) is configured to elastically interfere against at least two opposite sides of the second seat (12b) thereby ensuring a stable constraint of the box-like structure (17,18) in the second seat (12b).

2. Nameplate-button group (10) according to claim 1, wherein the bottom wall (17) comprises a thicker central portion (17a) configured for supporting the nameplate (14) and a thinner base portion (17b) configured to form at least one nose protruding from the central portion (17a).

3. Nameplate-button group (10) according to claim 1 or 2, wherein at least an engagement nose (18a) protrudes from the edge of the open side of the protective cover (18), the engagement nose (18a) being configured to engage beneath at least one first protrusion (12d) obtained in a wall of the second seat (12b) of the housing structure (12).

4. Nameplate-button group (10) according to claim 3, wherein in a side wall of the protective cover (18), opposite to the side from which the engagement nose (18a) protrudes, a recess (18b) is provided, the recess (18b) being configured for receiving at least one second protrusion (12e) formed in an opposite wall of the second seat (12b) with respect to the wall that carries the at least one first protrusion (12d).

5. Nameplate-button group (10) according to any one of the preceding claims, wherein the bottom wall (17) is at least partially made of a material permeable to light, preferably made of silicone.

6. Nameplate-button group (10) according to claim 5, wherein below the bottom wall (17) a diffusive layer (20) is provided.

7. Nameplate-button group (10) according to any one of the preceding claims, wherein the button (13) comprises a key (13a) located movably along an actuation axis (A) at the first seat (12a), a key cover (13c) being releasably locked above the key (13a) with reference to the actuation axis (A).

8. Nameplate-button group (10) according to claim 7, wherein the key cover (13c) is mushroom-shaped thereby comprising a head (13c") and an appendix (13c') which protrudes below the head (13c"), the key (13a) centrally comprising a hole (13a') for the insertion of the lower appendix (13c') of the key cover (13c).

9. Nameplate-button group (10) according to claim 7 or 8, wherein between the key cover (13c) and the key (13a) a gasket element (13b) is interposed, the gasket element (13b) comprising an engagement portion (13b"') configured to fit into an engagement seat (12c) of the housing structure (12) interposed between the first (12a) and the second (12b) seat.

10. Outdoor intercom unit (100) for an intercom and/or video door entry system comprising at least one cover panel (51,101) and at least one nameplate-button group (10) according to any one of the preceding claims, the cover panel (51,101) being provided with at least a pair of openings, wherein a button (13) and a protective cover (18) of a nameplate (14) of the at least one nameplate-button group (10) respectively look out the at least one pair of openings.

## Patentansprüche

1. Namensschild-Tastengruppe (10) für eine Außensprecheinheit einer Gegensprechanlage und/oder ein Video-Türöffnungssystems umfassend eine Gehäusestruktur (12), die mindestens eine erste Auflagefläche (12a) definiert, die so konfiguriert ist, dass er mindestens teilweise eine Taste (13) aufnimmt, und eine zweite Auflagefläche (12b), die so konfiguriert ist, dass sie mindestens teilweise ein Namensschild (14) aufnimmt, wobei in der zweiten Auflagefläche (12b) eine kastenartige Struktur (17, 18) zum Aufnehmen des Namensschildes (14) untergebracht ist, die eine Schutzabdeckung (18) mit einer kastenförmigen Konfiguration mit einer offenen Seite und einer Bodenwand (17) aufweist, die zum Schließen der offenen Seite der Schutzabdeckung (18) konfiguriert ist, wobei die Bodenwand (17) zumindest teilweise aus einem elastischen Material hergestellt ist und im Inneren in Bezug auf die zweiten Auflagefläche (12b) der Gehäusestruktur (12) angeordnet ist, **dadurch gekennzeichnet, dass** die Bodenwand (17) so konfiguriert ist, dass sie elastisch in mindestens zwei gegenüberliegende Seiten der zweiten Auflagefläche (12b) eingreift, wodurch eine stabile Einspannung der kastenartigen Struktur (17, 18) in der zweiten Auflagefläche (12b) gewährleistet wird.

2. Namensschild-Tastengruppe (10) nach Anspruch 1, wobei die Bodenwand (17) einen dickeren Mittelteil (17a), der zum Tragen des Namensschildes (14) konfiguriert ist, und einen dünneren Basisteil (17b) umfasst, der so konfiguriert ist, dass er mindestens eine Nase bildet, die aus dem Mittelteil (17a) vorsteht.

3. Namensschild-Tastengruppe (10) nach Anspruch 1 oder 2, wobei mindestens eine Eingriffsnase (18a) von der Kante der offenen Seite der Schutzabdeckung (18) vorsteht, wobei die Eingriffsnase (18a) so konfiguriert ist, dass sie unter mindestens einen ersten Vorsprung (12d) eingreift, der in einer Wand der zweiten Auflagefläche (12b) der Gehäusestruktur (12) vorgesehen ist.

4. Namensschild-Tastengruppe (10) nach Anspruch 3, wobei in einer Seitenwand der Schutzabdeckung (18) gegenüber der Seite, von der die Eingriffsnase (18a) vorsteht, eine Aussparung (18b) vorgesehen ist, wobei die Aussparung (18b) zum Aufnehmen mindestens eines zweiten Vorsprungs (12e) konfiguriert ist, der in einer gegenüberliegenden Wand der zweiten Auflagefläche (12b) in Bezug auf die Wand ausgebildet ist, die den mindestens einen ersten Vorsprung (12d) trägt.

5. Namensschild-Tastengruppe (10) nach einem der vorstehenden Ansprüche, wobei die Bodenwand (17) zumindest teilweise aus einem lichtdurchlässigen Material, vorzugsweise aus Silikon, besteht.

6. Namensschild-Tastengruppe (10) nach Anspruch 5, wobei unterhalb der Bodenwand (17) eine Diffusionsschicht (20) vorgesehen ist.

7. Namensschild-Tastengruppe (10) nach einem der vorstehenden Ansprüche, wobei die Taste (13) ein Tastenelement (13a) aufweist, die beweglich entlang einer Betätigungsachse (A) an der ersten Auflagefläche (12a) angeordnet ist, wobei eine Tastenabdeckung (13c) oberhalb des Tastenelements (13a) in Bezug auf die Betätigungsachse (A) lösbar verriegelt ist.

8. Namensschild-Tastengruppe (10) nach Anspruch 7, wobei die Tastenabdeckung (13c) pilzförmig ausgebildet ist und dadurch einen Kopf (13c") und einen Fortsatz (13c') aufweist, der unter dem Kopf (13c") vorsteht, wobei das Tastenelement (13a) mittig ein Loch (13a') zum Einführen des unteren Fortsatzes (13c') der Tastenabdeckung (13c) aufweist.

9. Namensschild-Tastengruppe (10) nach Anspruch 7 oder 8, wobei zwischen der Tastenabdeckung (13c) und dem Tastenelement (13a) ein Dichtungselement (13b) angeordnet ist, wobei das Dichtungselement (13b) einen Eingriffsabschnitt (13b"') aufweist, der so konfiguriert ist, dass er in eine Eingriffsauflagefläche (12c) der Gehäusestruktur (12) passt, der zwischen der ersten (12a) und der zweiten (12b) Auflagefläche angeordnet ist.

10. Außensprecheinheit (100) für ein Gegensprech- und/oder Videotüröffnungssystem umfassend mindestens eine Abdeckplatte (51, 101) und mindestens eine Namensschild-Tastengruppe (10) nach einem der vorhergehenden Ansprüche, wobei die Abdeckplatte (51, 101) mit mindestens einem Paar Öffnungen versehen ist, wobei eine Taste (13) und eine Schutzabdeckung (18) eines Namensschildes (14) der mindestens einen Namensschild-Tastengruppe (10) jeweils aus dem mindestens einen Paar Öffnungen herausschauen.

## Revendications

1. Groupe de boutons porte-noms (10) pour une unité d'interphone extérieure d'un système d'entrée d'interphone et/ou de porte vidéo comprenant une structure de boîtier (12) définissant au moins un premier siège (12a) configuré pour recevoir au moins partiellement un bouton (13) et un second siège (12b) configuré pour recevoir au moins partiellement un porte-nom (14), dans le second siège (12b) étant reçue une structure de type boîte (17, 18) pour contenir le porte-nom (14) comprenant un couvercle de protection (18) ayant une configuration en forme de boîte avec un côté ouvert et une paroi de fond (17) configurée pour fermer le côté ouvert du couvercle de protection (18), la paroi de fond (17) étant au moins partiellement faite d'un matériau élastique et étant disposée à l'intérieur du second siège (12b) de la structure de boîtier (12), **caractérisé par le fait que** la paroi de fond (17) est configurée pour interférer élastiquement contre au moins deux côtés opposés du second siège (12b), assurant ainsi une contrainte stable de la structure de type boîte (17, 18) dans le second siège (12b).

2. Groupe de boutons porte-noms (10) selon la revendication 1, dans lequel la paroi de fond (17) comprend une partie centrale plus épaisse (17a) configurée pour supporter le porte-nom (14) et une partie de base plus mince (17b) configurée pour former au moins un nez faisant saillie à partir de la partie centrale (17a).

3. Groupe de boutons porte-noms (10) selon la revendication 1 ou 2, dans lequel au moins un nez d'engagement (18a) fait saillie à partir du bord du côté ouvert du couvercle de protection (18), le nez d'engagement (18a) étant configuré pour s'engager sous au moins une première saillie (12d) obtenue dans une paroi du second siège (12b) de la structure de boîtier (12).

4. Groupe de boutons porte-noms (10) selon la revendication 3, dans lequel un évidement (18b) est ménagé dans une paroi latérale du couvercle de protection (18), opposée au côté à partir duquel le nez d'engagement (18a) fait saillie, l'évidement (18b) étant configuré pour recevoir au moins une seconde saillie (12e) formée dans une paroi opposée du second siège (12b) par rapport à la paroi qui porte l'au moins une première saillie (12d).

5. Groupe de boutons porte-noms (10) selon l'une quelconque des revendications précédentes, dans lequel la paroi de fond (17) est au moins partiellement faite d'un matériau perméable à la lumière, de préférence faite de silicone.

6. Groupe de boutons porte-noms (10) selon la revendication 5, dans lequel une couche de diffusion (20) est disposée sous la paroi de fond (17).

7. Groupe de boutons porte-noms (10) selon l'une quelconque des revendications précédentes, dans lequel le bouton (13) comprend une touche (13a) située de manière mobile le long d'un axe d'actionnement (A) au premier siège (12a), un couvercle de touche (13c) étant verrouillé de manière libérable au-dessus de la touche (13a) par rapport à l'axe d'actionnement (A).

8. Groupe de boutons porte-noms (10) selon la revendication 7, dans lequel le couvercle de touche (13c) est en forme de champignon, comprenant ainsi une tête (13c") et un appendice (13c') qui fait saillie sous la tête (13c"), la touche (13a) comprenant au centre un trou (13a') pour l'insertion de l'appendice inférieur (13c') du couvercle de touche (13c).

9. Groupe de boutons porte-noms (10) selon la revendication 7 ou 8, dans lequel un élément joint (13b) est interposé entre le couvercle de touche (13c) et la touche (13a), l'élément joint (13b) comprenant une partie d'engagement (13b'") configurée pour s'ajuster dans un siège d'engagement (12c) de la structure de boîtier (12) interposé entre les premier (12a) et second (12b) sièges.

10. Unité d'interphone extérieure (100) pour un système d'entrée d'interphone et/ou de porte vidéo comprenant au moins un panneau de couvercle (51, 101) et au moins un groupe de boutons porte-noms (10) selon l'une quelconque des revendications précédentes, le panneau de couvercle (51, 101) comportant au moins une paire d'ouvertures, un bouton (13) et un couvercle de protection (18) d'un porte-nom (14) de l'au moins un groupe de boutons porte-noms (10) sont respectivement en regard de l'au moins une paire d'ouvertures.
